Europäisches Patentamt

European Patent Office

Office européen des brevets

(19)

(11) Veröffentlichungsnummer: **0 248 788 B1**

# (12) EUROPÄISCHE PATENTSCHRIFT

(45) Veröffentlichungstag der Patentschrift: 04.12.91

(51) Int. Cl.⁵: **C09K 3/14, C04B 35/10**

(21) Anmeldenummer: 87890124.8

(22) Anmeldetag: 02.06.87

(54) **Mikrokristallines Schleifmittel und Verfahren zur Herstellung.**

(30) Priorität: 03.06.86 AT 1503/86

(43) Veröffentlichungstag der Anmeldung:
09.12.87 Patentblatt 87/50

(45) Bekanntmachung des Hinweises auf die
Patenterteilung:
04.12.91 Patentblatt 91/49

(84) Benannte Vertragsstaaten:
DE FR GB IT

(56) Entgegenhaltungen:
EP-A- 0 152 768
EP-A- 0 168 606

JOURNAL OF THE AMERICAN CERAMIC SO-
CIETY, Band 68, Nr. 9, September 1985, Seiten 500-505, Columbus, Ohio, US; M. KUMA-
GAI et al.: "Controlled transformation and
sintering of a boehmite sol-gel by alphaalumina seeding"

(73) Patentinhaber: **Treibacher Chemische Werke
Aktiengesellschaft
Postfach 31
A-9330 Treibach(AT)**

(72) Erfinder: **Winkler, Herwig, Dr.
Elsässergasse 11
A-9073 Klagenfurt/Kärnten(AT)**
Erfinder: **Janz, Peter, Dr.
Feldkirchnerstrasse 67
A-9020 Klagenfurt/Kärnten(AT)**
Erfinder: **Gottschamel, Georg, Dr.
Kansnitstrasse 10/3
A-9330 Treibach/Kärnten(AT)**

(74) Vertreter: **Kliment, Peter, Dipl.-Ing. Mag.-jur. et
al
Singerstrasse 8
A-1010 Wien(AT)**

## Beschreibung

Die Erfindung betrifft ein Verfahren zur Herstellung eines gesinterten mikrokristallinen Schleifmaterials auf der Basis von Aluminiumoxid.

Es ist bekannt, daß zur Herstellung von gesinterten Schleifmaterialien verschiedene $Al_2O_3$-haltige Rohstoffe, wie z.B. Tonerde oder Bauxit verwendet werden.

So beschreibt die DE-AS 14 71 331 ein Schleifkornmaterial, das durch Verdichten von zerkleinertem calciniertem Naturbauxit bei Drücken bis 703 kp/cm² und anschließendem Sintern bei Temperaturen zwischen 1370° und 1570°C hergestellt wird. Der Großteil der Kristalle dieses Schleifkornmaterials weist eine Größe von 5 - 30 μm auf.

Die US-PS 4 086 067 beschreibt ein poröses, gesintertes Schleifkorn, bei dem zur Erzielung einer definierten Porenradienverteilung und eines definierten Porenvolumens dem Aluminiumoxid vor dem Sintern Kunststoffpartikel, Korkpartikel u.a. zugesetzt werden.

Die US-PS 4 252 544 beschreibt einen Sinterkorund mit einer Dichte von über 3,75 g/cm³ und großer Härte. Dieses Material besteht aus einer Mischung von geschmolzenem oder calciniertem Aluminiumoxidpulver, wobei eine feine Fraktion mit <1μm und eine gröbere Fraktion mit einer Korngröße von 3 - 10 μm in Anwesenheit von Wasser und Bindemittel vermischt und geknetet und danach extrudiert wird. Die Sinterung der getrockneten und geschnittenen Stücke erfolgt bei Temperaturen zwischen 1550° und 1650°C.

Gegenstand der Erfindung ist es, ein einfaches und kostengünstiges Verfahren zur Herstellung eines nichtgeschmolzenen mikrokristallinen Schleifmaterials anzugeben, das aus mindestens 98,5% $\alpha$-$Al_2O_3$ besteht, eine Dichte von mindestens 95% der theoretischen Dichte aufweist, wobei die Größe der Kristalliten des $\alpha$-$Al_2O_3$ <4μm und vorzugsweise <3 μm ist. Dieses Schleifmaterial soll sich weiters durch große Härte und Zähigkeit auszeichnen und sich für das Hochdruckschleifen eignen.

Dieses Verfahren besteht darin, daß man eine Mischung aus calcinierter fein gemahlener Tonerde und 1 - 60 Gew.-%, vorzugsweise 2 - 30 Gew.-% eine hoch dispersen Aluminiumoxidmonohydrats herstelt, diese Mischung mit Wasser und Säure zersetzt, homogenisiert, die Formbare Masse zerkleinert oder zu regelmäßigen geometrischen Formkörpern verpreßt und anschließend bei Temperaturen zwischen 1300° und 1700°C während 5 Minuten bis 2 Stunden sintert.

Überraschenderweise wurde nämlich festgestellt, daß die Verwendung eines hochdispersen $\alpha$-Aluminiumoxidmonohydrats als Zusatz zu Tonerde ein Schleifmaterial ermöglicht, das sich durch sehr hohe Dichte und Zähigkeit auszeichnet und dessen Einzelkörner eine härtere Oberfläche aufweisen als im Handel befindliche vergleichbare Schleifmaterialien.

Bei Verwendung von calcinierter Tonerde und hochdispersem $\alpha$-Aluminiumoxidhydrat mit einer Korngröße <2μm, vorzugsweise <1μm ist gewährleistet, daß das Endprodukt eine Kristallitengröße von weniger als 4μm aufweist.

Als hochdisperse $\alpha$-Aluminiumoxidhydrate können die im Handel befindlichen Pseudeboehmite verwendet werden, die unter dem Namen Pural®, Disperal® und Versal® bekannt sind.

Weiters wurde festgestellt, daß bereits geringe Zusätze eines oder mehrerer Elemente aus der Gruppe Mg, Si, Ti, Zr, Cr, Ni, Ce, Fe und Mn die Leistung des Schleifmaterials noch weiter verbessern können. Diese Zusätze liegen in der Größenordnung bis max. 1 Gew.-% gerechnet als Oxid bezogen auf den $\alpha$-Al2O3-Gehalt. Dies läßt sich dadurch geklären, daß durch diese Zusätze das Kristallwachstum während des Sintervorgangs stark eingeschränkt wird und somit ein äußerst mikrokristallines Gefüge erreicht wird.

Ein weiterer Vorteil des erfindungsgemäßen Verfahrens ist, daß zum Verpressen der formbaren Masse keinerlei zusätzliche Bindemittel benötigt werden, die dann beim Sintern die Dichte infolge erhöhter Porenbildung negativ beeinflussen könnten.

Sind die Ausgangsmaterialien (calcinierte Tonerde und $\alpha$-Aluminiumoxidmonohydrat) in genügender Feinheit nicht verfügbar, so werden diese Materialien nach bekannten Zerkleinerungsverfahren einer Mahlung mit dem Ziel unterzogen, daß die Korngröße der aluminiumoxidhaltigen Materialien 2 μ, vorzugsweise 1 μ nicht überschreitet. Vorteilhaft ist eine Naßmahlung in einer Schwingmühle oder Kugelmühle mit Tonerdekugeln als Mahlkörper. In jedem Falle ist jedoch bei Einsatz des hochdispersen Al-Oxidmonohydrats der Zusatz von Säure notwendig, da dadurch eine Agglomerierung des Al-Oxidmonohydrats verhindert bzw. bei mechanischer Einwirkung eine Desagglomeration des hochdispersen Materials bewirkt wird.

Nach der Naßmahlung wird die gemahlene saure Tonerde-Aluminiumoxidhydrat-Suspension, gegebenenfalls mit Zusätzen eines oder mehrerer Elemente aus der Gruppe Mg, Si, Ti, Zr, Cr, Ni, Ce, Fe und Mn, aus der Mahlvorrichtung gegossen und soweit entwässert, daß eine formbare Masse entsteht, die dann zerkleinert oder zu regelmäßigen geometrischen Formkörpern verpreßt wird.

Bei Durchführung des erfindungsgemäßen Verfahrens erhält man auf Grund des Zusatzes des dispergierbaren $\alpha$-Al-Oxidmonohydrats eine formbare Masse, die ohne Zusatz eines weiteren organischen oder anorganischen Binders verpreßbar ist und auch nach dem Sintern sehr große Härte und Festigkeit aufweist.

Die Grünkornbildung wird vorzugsweise durch Pressen oder Extrudieren der formbaren Masse durch eine Matrize ausgeführt, um Stränge von gleichmäßigem Querschnitt zu formen, die anschließend in Teile bestimmter Länge geschnitten werden.

Das Grünkorn wird danach getrocknet und gesintert. Die Sinterung wird in oxidierender Atmosphäre bei Temperaturen zwischen 1300 und 1700° C, vorzugsweise zwischen 1350 und 1550° C durchgeführt. Die Sinterzeit variiert in Abhängigkeit von der Temperatur, der Art des Sinterofens und vor allem von der Zusammensetzung des Grünkorns und liegt im Bereich von 5 Minuten bis 2 Stunden. Als Sinteröfen sind sowohl Drehrohröfen wie auch Pendelöfen und Durchstoßöfen zur Herstellung eines erfindungsgemäßen Schleifmaterials geeignet. Die erhaltenen Schleifkörnungen weisen eine Dichte von mehr als 95 % der theoretischen Dichte auf und haben u.a. auf Grund der niedrigen Sintertemperatur ein mikrokristallines Gefüge, wobei die Kristallitengröße der $\alpha$-Al2O3-Kristalliten 4 $\mu$ nicht überschreitet.

Bei einem Anteil von über 60 Gew.-% an dispergierbarem Al-Oxidmonohydrat zeigt das Material beim Trocknen und Sintern starke Schrumpfung, die Kornausbeute und die Wirtschaftlichkeit dieses Materials wird dadurch negativ beeinflußt.

Die nach dem erfindungsgemäßen Verfahren hergestellten Schleifmaterialien wurden zu Schleifscheiben verarbeitet und einer vergleichenden Testserie gegen Rostfreistahl unterzogen. Es wurde das Abtragsverhältnis, d.i. Materialabtrag / Scheibenverschleiß (= 100 % für Elektroschmelzkorund) bestimmt. Dabei ergaben sich für das erfindungsgemäße Schleifmaterial deutlich höhere Werte im Vergleich zu handelsüblichen Schleifmaterialien in Grobschleifscheiben. Diese Werte sind in der Tabelle angeführt.

Beispiel 1

Eine Mischung aus 67,5 g Gew.-% Tonerde (Korngröße < 1 $\mu$), 6,75 Gew.-% Disperal® (Korngröße < 1 $\mu$), 24,1 Gew.-% Wasser, 1,1 Gew.-% HNO3 (65%ig) und 0,27 Gew.-% Mg(NO3)2 wurden in einem Duplex-Kneter ca. 1 Stunde homogenisiert und danach stranggepreßt. Der Preßdruck betrug 50 - 90 bar, der Matrizendurchmesser war 2 mm. Die Stränge wurden dann in ca. 4 mm lange Stücke geschnitten, getrocknet und bei 1450° C 1 Stunde gesintert. Die Dichte des gesinterten Materials betrug 3,82 g/cm³. Die auf dem Rasterelektronenmikroskop ermittelte Kristallitengröße des $\alpha$-Al2O3 lag unter 3 $\mu$.

Dieses Material wurde danach zu Schleifscheiben verarbeitet und das Abtragsverhältnis im Vergleich zu Elektroschmelzkorund gegenüber Rostfreistahl bestimmt. Der Wert lag bei 295 %.

Beispiel 2

15 kg eines Tonerdehydrats, das bei 1200° C calciniert wurde (Korngröße < 30 $\mu$), wurde mit 15 l Wasser in einer Kugelmühle mit Al-Oxidkugeln als Mahlkörper 48 Stunden gemahlen. Die Korngröße des Tonerdehydrats nach der Mahlung war < 2 $\mu$. Anschließend wurden der wäßrigen Tonerdesuspension 1,5 kg des dispergierbaren $\alpha$-Aluminiumoxidhydrats (Disperal®; Teilchengröße 75 % <45 $\mu$) und 300 g 65%iger Salpetersäure sowie 103 g Magnesiumnitrathexahydrat zugesetzt und weitere 2 Stunden gemahlen. Die so hergestellte Suspension wurde dann soweit entwässert, bis eine teigige Konsistenz erhalten wurde. Mit einem Laborextruder mit Einzugswalze wurde anschließend das Material durch eine Matrize gepreßt und mittels Kopfgranulieranlage zu Grünkorn geschnitten, das eine mittlere Länge von 2,5 - 4,4 mm und einen Durchmesser von 2,2 mm aufwies. Das Grünkorn wurde in Keramiktassen geschichtet und in einem elektrischen Widerstandsofen in Luftatmosphäre bei 1500° C 1,5 Stunden gesintert. Das gesinterte Material hatte einen mittleren Durchmesser von 1,7 mm und eine mittlere Länge von etwa 3,3 mm. Die Dichte des Schleifkorns betrug 3,80 g/cm³, die Knoop-Härte 2100 kg/mm², die Kristallitengröße war <4 $\mu$.
In der Schleifscheibe erbrachte diese Mat. ein Abtragsverhältnis im Vergleich zu Elektrokorund von 260 %.

Beispiel 3

Eine Suspension von bei 1200° C calciniertem Tonerdehydrat (Korngröße <30 $\mu$) in Wasser im Gewichtsverhältnis 1 : 1 wurde in einer Rührwerkskugelmühle, die mit Polyurethan ausgekleidet war, 6 Stunden gemahlen. Die Feinheit des gemahlenen Materials betrug < 1 $\mu$. Nach Zugabe von 50 Gew.-% $\alpha$-Aluminiumoxidmonohydrat (bezogen auf die eingesetzte Tonerde), 1,5 Gew.-% Salpetersäure (65%ig) (bezogen auf die Suspension) und 0,64 Gew.-% Magnesiumnitrathexahydrat (bezogen auf Al2O3-Gehalt) wurde die Mischung einer weiteren Kugelmühlenmahlung für 1 Std. unterzogen. Anschließend wurde wie in Beispiel 2 beschrieben ein Grünkorn bereitet, das einer Sinterung bei 1450° C für 1 Stunde unterworfen wurde. Das gesinterte Korn hatte eine Dichte von 3,88 g/cm³, die Kristallitengröße lag unter 2 $\mu$. Die Abtragsleistung dieses Schleifkorns in der Schleifscheibe betrug 310 % bezogen auf Elektroschmelzkorund.

Beispiel 4

10 kg calciniertes Tonerdehydrat wurde mit 10 l Wasser in einer Kugelmühle mit Al-Oxidkugeln 36 Stunden lang gemahlen. Die Ausgangsfeinheit war < 30 μ, die Endfeinheit < 2 μ. Nach Zusatz von 1,0 kg dispergierbaremα-Al-Oxidmonohydrat und 200 g Salpetersäure (65%ig) wurde die Suspension weitere 3 Stunden gemahlen .

Anschließend wurde das Material in einer 5 - 10 cm dicken Schicht auf Tassen bei 80° C entwässert und zu harten, spröden Platten getrocknet. Diese wurden in einer Hammermühle zu Körnern zerkleinert, in einer Siebmaschine vorklassiert und der anfallende Feinanteil in den Prozeß rückgeführt. Die grünen Körner wurden dann in einem elektrischen Widerstandsofen bei 1500° C 2 Stunden gesintert. Die Dichte des gesinterten Korns betrug 3,79 g/cm³, die Kristallitengröße lag unter 4 μ. Die Abtragsleistung dieses Materials in der Schleifscheibe betrug 260 % bezogen auf Elektroschmelzkorund.

Tabelle: Abtragsverhältnis

Elektroschmelzkorund 100 %
Zirkonkorund 209 %
Sinterkorund n. DE OS 1 471 331 126 %
Sinterkorund nach US PS 4,252,544 252 %
erfindungsgemäßer Sinterkorund
nach Beispiel 1 295 %
nach Beispiel 2 260 %
nach Beispiel 3 310 %
nach Beispiel 4 260 %

**Patentansprüche**

1. Verfahren zur Herstellung eines gesinterten mikrokristallinen Schleifmaterials auf der Basis von α-Al₂O₃, bei dem man eine Mischung aus calcinierter fein gemahlener Tonerde und 1 - 60 Gew.-%, vorzugsweise 2 - 30 Gew.-% eines hochdispersen α-Aluminiumoxidmonohydrats herstellt, wobei die Korngrößen der calcinierten Tonerde und des hochdispersen α-Aluminiumoxidmonohydrats <2 μm, vorzugsweise <1 μm sind diese Mischung mit Wasser und Säure zersetzt, homogenisiert, die formbare Masse zerkleinert oder zu regelmäßigen geometrischen Formkörpern verpreßt und anschließend bei Temperaturen zwischen 1300° C und 1700° C während 5 min bis 2 Stunden sintert.

2. Verfahren nach Anspruch 1, bei dem der Ausgangsmischung Zusätze eines oder mehrerer Elemente aus der Gruppe Mg, Si, Ti, Zr, Cr, Ni, Ce, Fe oder Mn in einer Menge von maximal 1 Gew.-%, und vorzugsweise weniger als 0,5 Gew.-% in Form ihrer Oxide, bezogen auf den Al₂O₃-Gehalt des Endproduktes, zugegeben werden.

3. Verfahren zur Herstellung eines Schleifmaterials nach einem der Ansprüche 1 bis 2, wobei die Mischung durch den Säurezusatz einen pH-Wert zwischen 2 und 3 aufweist.

4. Verfahren zur Herstellung eines Schleifmaterials nach Anspruch 4, wobei zur Einstellung des pH-Wertes Salpetersäure verwendet wird.

5. Verfahren zur Herstellung eines Schleifmaterials nach einem der Ansprüche 1 bis 4, wobei das zerkleinerte und zu regelmäßigen geometrischen Formkörpern verpreßte Produkt bei Temperaturen zwischen 1350° C und 1550° C während 5 min bis 2 Stunden gesintert wird.

6. Verfahren zur Herstellung eines gesinterten, mikrokristallinen Schleifmaterials auf der Basis von α-Al₂O₃, wobei ein Gemisch aus calcinierter Tonerde und 1 bis 60 Gew.-%, vorzugsweise 2 bis 30 Gew.-% eines hochdispersen α-Aluminiumoxidmonohydrats gegebenenfalls mit Zusätzen eines oder mehrerer Elemente der Gruppe Mg, Si, Ti, Zr, Cr, Ni, Ce, Fe oder Mn in einer Menge von maximal 1 Gew.-% und vorzugsweise weniger als 0,5 Gew.-% in Form ihrer Oxide, bezogen auf den Al₂O₃-Gehalt des Endproduktes, in Wasser suspendiert wird, die Suspension durch Säurezusatz auf einen pH-Wert zwischen 2 und 3 eingestellt wird und solange gemahlen wird, bis die Korngröße <2 μm, vorzugsweise <1 μm beträgt, danach die Suspension zu formbarer Konsistenz entwässert wird, dieses Material zerkleinert oder zu regelmäßigen geometrischen Formkörpern verpreßt wird, und während 5 min bis 2 Stunden bei Temperaturen zwischen 1300° C und 1700° C, vorzugsweise zwischen 1350° C und 1550° C gesintert wird.

7. Verfahren zur Herstellung eines gesinterten, mikrokristallinen Schleifmaterials auf der Basis von α-Al₂O₃, wobei calcinierte Tonerde in Wasser suspendiert wird und solange gemahlen wird, bis die Korngröße <2 μm, vorzugsweise <1 μm beträgt, danach so viel hochdisperses α-Aluminiumoxidmonohydrat zugesetzt wird, daß dessen Anteil in der Mischung mit Tonerde 1 bis 60 Gew.-%, vorzugsweise 2 bis 30 Gew.-% beträgt, gegebenenfalls eines oder mehrere Elemente aus der Gruppe Mg, Si, Ti, Zr, Cr, Ni, Ce, Fe oder Mn in einer Menge von maximal 1 Gew.-% und vorzugsweise weniger als 0,5 Gew.-% in Form ihrer Oxide, bezogen auf den Al₂O₃-Gehalt des Endproduktes, zugesetzt werden und danach die Suspension durch Säurezusatz auf einen pH-Wert zwischen 2 und 3 eingestellt wird die Suspension zu formbarer Konsistenz entwässert wird, dieses Material zerkleinert oder zu regelmäßigen geometrischen Formkörpern verpreßt wird und während 5 min bis 2 Stunden bei Temperaturen zwischen 1300°C und 1700°C, vorzugsweise zwischen 1350°C und 1550°C gesintert wird.

## Claims

1. Method for manufacturing a sintered microcrystalline abrasive material on the basis of $\alpha$-$Al_2O_3$, in which a mixture of calcined and finely ground alum earth with a 1 - 60 per cent by weight, preferably 2 - 30 per cent by weight, of a highly dispersed $\alpha$-aluminium oxide monohydrate is made, whereby the grain sizes of the calcined alum earth and the highly dispersed $\alpha$-aluminium oxide monohydrate are < 2 $\mu$m, preferably < 1 $\mu$m, and that said mixture is dissolved by means of water and acid, homogenised, and that the mouldable mass is comminuted or pressed into regular geometrically formed bodies and, subsequently, sintered for 5 min to 2 hours at temperatures between 1300°C and 1700°C.

2. Method in accordance with claim 1 in which the initial mixture is given additions of one or several elements of the group Mg, Si, Ti, Zr, Cr, Ni, Ce, Fe and Mn amounting to one per cent by weight, preferably less than 0.5 per cent by weight in form of their oxides, relative to the $Al_2O_3$ content of the final product.

3. Method for manufacturing an abrasive material in accordance with one of the claims 1 to 2, whereby the mixture has a pH index of between 2 and 3 by the addition of an acid.

4. Method for manufacturing an abrasive material in accordance with claim 4, whereby nitric acid is used for adjusting the pH index.

5. Method for manufacturing an abrasive material in accordance with one of the claims 1 to 4, whereby the product, which has been comminuted and pressed into regular geometrically formed bodies, is sintered at temperatures between 1350°C and 1550°C for 5 min to 2 hours.

6. Method for manufacturing a sintered microcrystalline abrasive material on the basis of $\alpha$-$Al_2O_3$, whereby a mixture of calcined alum earth and 1 to 60 per cent by weight, preferably 2 to 30 per cent by weight, of a highly dispersed $\alpha$-aluminium oxide monohydrate, optionally with the addition of one or several elements of the group of Mg, Si, Ti, Zr, Cr, Ni, Ce, Fe or Mn amounting to one per cent by weight, preferably less than 0.5 per cent by weight, is suspended in water, whereby the suspension is adjusted to a pH index of between 2 and 3 by the addition of an acid and then ground until the grain size is < 2 $\mu$m, preferably < 1 $\mu$m, and that subsequently said suspension is dehydrated to the extent that it becomes mouldable matter, said matter being comminuted or pressed into regular geometrically formed bodies, and then sintered for 5 min to 2 hours at temperatures of between 1300°C and 1700°C, preferably between 1350°C and 1550°C.

7. Method for manufacturing sintered microcrystalline abrasive material on the basis of $\alpha$-$Al_2O_3$, whereby the calcined alum earth is suspended in water and ground until the grain size is < 2 $\mu$m, preferably < 1 $\mu$m, and that subsequently so much highly dispersed $\alpha$-aluminium oxide monohydrate is added to make its proportion in the mixture with alum earth 1 to 60 per cent by weight, preferably 2 to 30 per cent by weight, with the optional addition of one or several elements of the group Mg, Si, Ti, Zr, Cr, Ni, Ce, Fe amounting to a maximum of one per cent by weight, preferably less than 0.5 per cent by weight in form of its oxides, relative to the $Al_2O_3$ content of the final product, and that subsequently the suspension is adjusted to a pH index between 2 and 3 by the addition of an acid, dehydrated to form mouldable material, said material being comminuted or pressed into regular geometrically formed bodies and sintered for 5 min to 2 hours at temperatures between 1300°C and 1700°C, preferably between 1350°C and 1550°C.

## Revendications

1. Procédé de fabrication d'un produit abrasif microcristallin fritté à base de $Al_2O_3$ $\alpha$, suivant lequel on forme un mélange d'une alumine calcinée finement broyée avec de 1 à 60 % en poids, de préférence de 2 à 30 %, d'un oxyde d'aluminium $\alpha$ monohydraté finement dispersé, les dimensions des grains de l'alumine calciné et de l'oxyde d'aluminium étant inférieures à 2 $\mu$m, de préférence à 1 $\mu$m, on additionne le mélange d'eau et d'un acide et on l'homogénéise puis on broie la masse moulable obtenue ou bien on en forme par pression des corps géométriques réguliers et on fritte ensuite pendant 5 minutes à 2 heures à des températures de 1300 à 1700°C.

2. Procédé de la revendication 1 suivant lequel on ajoute au mélange initial un ou plusieurs des éléments Mg, Si, Ti, Zr, Cr, Ni, Ce, Fe et Mn dans une proportion, en oxydes, d'au maximum 1 % en poids, de préférence de moins de 0,5 %, par rapport à la quantité d'$Al_2O_3$ du produit final.

3. Procédé de fabrication d'un produit fritté selon la revendication 1 ou 2 dans lequel l'addition d'acide donne au mélange un pH de 2 à 3.

4. Procédé selon la revendication 4 dans lequel on règle le pH avec de l'acide nitrique.

5. Procédé selon l'une des revendications 1 à 4 dans lequel on fritte entre 1350 et 1550°C pendant une durée de 5 minutes à 2 heures le produit broyé et qui a été pressé en corps moulés géométriques réguliers.

6. Procédé de fabrication d'un produit abrasif microcristallin fritté à base d'$Al_2O_3$ $\alpha$, procédé suivant lequel on met en suspension dans de l'eau un mélange d'une alumine calcinée et de 1 à 60 % en poids, de préférence de 2 à 30 %, d'un oxyde d'aluminium $\alpha$ monohydraté très dispersé, éventuellement avec un ou plusieurs des éléments Mg, Si, Ti, Zr, Cr, Ni, Ce, Fe et Mn dans une proportion, en oxydes, d'au maximum 1 % et de préférence inférieure à 0,5 %, du poids d'$Al_2O_3$ du produit final, on porte cette suspension avec un acide à un pH de 2 à 3 et on la broie jusqu'à une dimension des grains inférieure à 2 $\mu$m, de préférence à 1 $\mu$m, puis on la déshydrate pour lui donner une consistance permettant des moulages et on broie cette matière ou bien on en forme par pressage des corps moulés géométriques réguliers et on la fritte pendant 5 minutes à 2 heures à des températures de 1300 à 1700°C, de préférence de 1350 à 1550°C.

7. Procédé de fabrication d'un produit abrasif microcristallin fritté à base d'$Al_2O_3$ $\alpha$, suivant lequel on met en suspension dans de l'eau une alumine calcinée que l'on broie à une dimension des grains inférieure à 2 $\mu$m, de préférence à 1 $\mu$m, puis à laquelle on ajoute un oxyde d'aluminium $\alpha$ monohydraté très dispersé dans une proportion de 1 à 60 % en poids, de préférence de 2 à 30 %, dans son mélange avec l'alumine, ainsi qu'éventuellement un ou plusieurs des éléments Mg, Si, Ti, Zr, Cr, Ni, Ce, Fe et Mn dans une proportion, en oxydes, d'au maximum 1 % et de préférence de moins de 0,5 % du poids d'$Al_2O_3$ du produit final, on porte la suspension avec un acide à un pH de 2 à 3 et on la déshydrate pour lui donner une consistance permettant des moulages, puis on broie cette matière ou bien on en forme par pressage des corps moulés géométriques réguliers et on la fritte pendant 5 minutes à 2 heures à des températures de 1300 à 1700°C, de préférence de 1350 à 1550°C.